# EUROPEAN PATENT SPECIFICATION

(11) **EP 2 127 912 B1**
(45) Date of publication and mention of the grant of the patent: **10.09.2014**
(21) Application number: 08721947.3
(22) Date of filing: 12.03.2008
(51) Int. Cl.: B60C 15/06, B60C 9/14

(54) **PNEUMATIC TIRE**
LUFTREIFEN
PNEU

(30) Priority: 13.03.2007 JP 2007063953
(43) Date of publication of application: 02.12.2009
(73) Proprietor: Bridgestone Corporation, Tokyo 104-8340 (JP)
(72) Inventor: FUKUNAGA, Takayuki, Kodaira-shi Tokyo 187-8531 (JP); NAGAI, Shu, Kodaira-shi Tokyo 187-8531 (JP); ITO, Toshiharu, Kodaira-shi Tokyo 187-8531 (JP)
(74) Representative: Oxley, Robin John George
(86) International application number: PCT/JP2008/054531
(87) International publication number: WO 2008/114666

(56) References cited:
- EP-A1- 1 925 469
- EP-A2- 1 792 755
- JP-A- 1 060 406
- JP-A- 06 143 945
- JP-A- 63 074 704
- JP-A- 2000 309 208
- JP-A- 2003 320 821
- JP-A- 2005 075 295

## Description

### Technical Field

The present invention relates to a pneumatic tire having improved performance in running at a relatively high speed.

### Prior Art

As a demand for improved tire performance increases, various techniques have been proposed which simultaneously satisfy plural performances which were conventionally regarded as incompatible with each other, such as driving stability, riding comfort, low-level noise, wear resistance performance and the like.
Examples of such techniques include a technique to design a tire to be asymmetrical with respect to the tire equatorial plane. For example, based on a fact that the vehicle inner side and the vehicle outer side of a tire in a state where the tire is mounted on a vehicle make different contributions to the aforementioned plural performances, respectively, there have been proposed a number of techniques to make the inner structure of a tire asymmetrical with respect to the equatorial plane (e.g. JP 63-008005, JP 2003-320821 and JP 2005-075295).

Further, needless to say, there are a number of proposals for improvements, which proposals pursue making a tread pattern or a tire sectional shape asymmetrical with respect to the equatorial plane.
The aforementioned techniques to make a tire structure asymmetrical propose separating functions between the vehicle inner side and the vehicle outer side of a tire in a state where the tire is mounted on a vehicle, based on a fact that forces acting on the tire are exerted asymmetrical with respect to the tire equatorial plane, regardless that the tire is running straight or in a cornering situation, as a result that behaviors and alignment of suspension are asymmetrical with respect to the tire equatorial plane in an environment where the tire mounted on a vehicle is used.

Examples of such techniques as described above, e.g. a technique regarding driving stability to improve cornering performance at a relatively large steering angle input at a relatively high speed, include a tire inner structure and/or a tire sectional shape where, on the basis of a fact that a relatively large lateral force is exerted on a tire mounted on the outer side of a cornering, in particular, on the vehicle outer side portion of said tire when a portion of the chassis on the outer side of a cornering dives under the conditions described above, rigidity of a sidewall portion on the vehicle outer side of a tire mounted on a vehicle is enhanced to resist the aforementioned lateral force to stabilize the posture of the vehicle.

Further, examples of the techniques to improve riding comfort include a tire sectional configuration where, on the basis of a discovery that deformation caused in a tire as a result of vertical movement of a vehicle is particularly significant on the vehicle inner side of the tire mounted on the vehicle in a vehicle provided with a negative camber, a radius of curvature of the inner side portion of a tire mounted on a vehicle is decreased to improve attenuation performance of vertical vibration.
Reference is also made to JP 2000-309208 corresponding with the preamble of claim 1; EP-A-1925469 and JP 1-060406.

### Disclosure of the Invention

### Problems to be solved by the Invention

According to the technique to design an inner structure or a sectional shape of a tire such that rigidity of a sidewall portion is enhanced to resist a lateral force exerted in a cornering situation and make the posture of a vehicle stable to improve driving stability, riding comfort deteriorates due to increase in vertical rigidity of the tire.

On the other hand, according to the technique to decrease rigidity of the sidewall portion to absorb an input from irregularities on a road surface to improve riding comfort, the driving stability deteriorates. In order to make these conflicting performances compatible with each other, there have been proposed a number of asymmetrical configurations and structures for enhancing rigidity of the vehicle outer side portion of a tire in a state where the tire is mounted on a vehicle.
However, none of these configurations or structures are satisfactory.

An object of the present invention is to provide a pneumatic tire capable of effectively making the conflicting performances, i.e. driving stability and riding comfort, compatible with each other by enhancing rigidity of the vehicle inner side portion of a tire mounted on a vehicle.

### Means for solving the Problems

As a result of various experiments and studies conducted by the inventor, following facts have been known.
The largest factor among the external factors which deteriorate driving stability at a very small steering angle in running straight or riding comfort is irregularities on a road surface which cause a running vehicle to vibrate in any vertical or lateral directions.

When a case where irregularities on a road hit the vehicle outer side portion of a tire mounted on a vehicle is compared with a case where irregularities on a road hit the vehicle inner side portion of the same tire, provided that the dimensions of the irregularities are the same in both cases, the vehicle outer side portion of the tire mounted on a vehicle, having a larger proportion of load exerted thereon, receive larger vibrations than the vehicle inner side portion of the tire because a wheel mounting support portion (a hub surface of a wheel) is provided in an offset manner in the majority of vehicles. Accordingly, it is assumed that suppressing a vibration input to the vehicle outer side portion of a tire mounted on a vehicle is more effective than suppressing a vibration input to the vehicle inner side portion of the same tire.

In a first aspect of the invention which has been contrived in view of the aforementioned facts, a pneumatic tire comprises: a pair of bead cores; a carcass extending over the pair of bead cores, with respective end portions thereof being turned up around the bead cores; a bead filler provided between a main body of the carcass extending from one bead core to the other bead core and a turned-up portion of the carcass turned up around the bead core, the bead filler extending from the bead core toward the outer side in the radial direction; a belt provided on the outer peripheral side of a crown region of the carcass; a tread rubber disposed on the outer peripheral side of the belt; and a sidewall rubber disposed on the outer side in the widthwise direction of the carcass, wherein a vehicle inner side bead filler sheet having a sheet-like shape is provided at a tire side portion which is positioned on the vehicle inner side when the tire is mounted on a vehicle, in a manner that the bead filler sheet is disposed from the inner side toward the outer side in the tire radial direction, such that rigidity of the tire side portion on the vehicle inner side of the tire is higher than rigidity of a tire side portion which is positioned on the vehicle outer side when the tire is mounted on a vehicle. In the present invention, "being provided at a tire side portion which is positioned on the vehicle inner side when the tire is mounted on a vehicle" represents not only provision of the bead filler sheet at the outer surface of the carcass but also provision thereof at a position on the outer side in the radial direction of the sidewall rubber.

Next, an operation of the pneumatic tire according to the first aspect of the present invention will be described.
In the pneumatic tire according to the first aspect of the present invention, the vehicle inner side bead filler sheet is provided for a reinforcement purpose at a tire side portion which is positioned on the vehicle inner side when the tire is mounted on a vehicle. Accordingly, the rigidity of the tire side portion on the vehicle inner side can be made relatively higher than the rigidity of the tire side portion on the vehicle outer side.

In a vehicle, a lateral force acting in a positive direction is exerted on a vehicle outer side wheel in a cornering situation. Therefore, by setting such a wheel to have negative camber in advance, good ground contact property in a cornering situation is ensured.
In a case where the pneumatic tire according to the first aspect of the present invention is used for a front wheel, a ground contact pressure at the vehicle inner side portion of a tread of the tire mounted on a vehicle when the vehicle inner side portion is in contact with the ground is higher than a ground contact pressure at the vehicle outer side portion of the tread when the vehicle outer side portion is in contact with the ground, whereby the steering force intended by a driver can be easily transmitted to a road surface and driving stability is improved.
Further, rigidity of the tire side portion on the vehicle outer side is made relatively small than rigidity of the tire side portion on the vehicle inner side, i.e. increase in rigidity of the tire side portion on the vehicle outer side, which receives relatively large input from irregularities on a road surface, is suppressed, whereby vibrations caused to the tire and eventually the vehicle can be alleviated.

Yet further, in the pneumatic tire described above, it suffices that the vehicle inner side bead filler sheet is additionally attached in production of a green tire. Therefore, there is no need to prepare a new mold for the present invention and use of the existing mold suffices.

In the first aspect of the present invention, a vehicle outer side bead filler sheet having a sheet-like shape is provided at a tire side portion which is positioned on the vehicle outer side when the tire is mounted on a vehicle, in a manner that the bead filler sheet is disposed from the inner side toward the outer side in the tire radial direction, and, provided that the height of the vehicle inner side bead filler sheet from a reference line passing through a rim diameter line in use for measuring a tire sectional height and in parallel to the tire center axis, to the outer end in the tire radial direction of the vehicle inner side bead filler sheet, measured from the reference line toward the outer side in the tire radial direction, is H1 and the height of the vehicle outer side bead filler sheet from the reference line to the outer end in the tire radial direction of the vehicle outer side bead filler sheet, measured from the reference line toward the outer side in the tire radial direction, is H2, H1/H2 is in the range of 105 to 160%.
In the pneumatic tire according to the first aspect of the present invention, high driving stability can be obtained by setting H1/H2 in the range of 105 to 160%.
In a case where H1/H2 is smaller than 105%, rigidity of the tire side portion on the vehicle inner side is not sufficiently enhanced, whereby driving stability is not sufficiently improved.
In a case where H1/H2 exceeds 160%, rigidity of the tire side portion on the vehicle inner side is too high, whereby riding comfort deteriorates.

In the first aspect of the present invention, the vehicle inner side bead filler sheet and the vehicle outer side bead filler sheet are formed of only rubber of the same type as that of the bead filler.

In the pneumatic tire according to the first aspect of the present invention, rigidity of the tire side portions can be enhanced by forming the vehicle inner side bead filler sheet and the vehicle outer side bead filler sheet by rubber of the same type as the rubber of the bead filler. Further, since the number of types of rubber species need not be increased in production, cost can be reduced.

In a second aspect of the present invention, the pneumatic tire of the first aspect of the present invention is characterized in that the vehicle inner side bead filler sheet and the vehicle outer side bead filler sheet are formed of rubber, respectively, and rubber hardness of the vehicle inner side bead filler sheet is higher than rubber hardness of the vehicle outer side bead filler sheet.

Next, an operation of the pneumatic tire according to the second aspect of the present invention will be described. In the pneumatic tire according to the third aspect of the present invention, rigidity of the tire side portion on the vehicle inner side can be enhanced by setting rubber hardness of the vehicle inner side bead filler sheet higher than rubber hardness of the vehicle outer side bead filler sheet, so that good driving stability can be obtained.

### Effect of the Invention

As described above, according the tire of the present invention, there can be obtained a superior effect that improvements of driving stability and riding comfort can be made compatible with each other.

### Brief Description of the Drawings

FIG. 1 is a sectional view cut along the center axis of a pneumatic tire according to an embodiment of the present invention.
FIG. 2 is a sectional view cut along the center axis of a pneumatic tire according to another embodiment of the present invention.

### Explanation of Reference Numerals

- 10: Pneumatic tire
- 12: Bead portion
- 14: Bead core
- 16: Carcass
- 18: Belt
- 24: Tread rubber
- 28: Side rubber
- 30: Bead filler
- 32_{IN}: Vehicle inner side bead filler sheet
- 32_{OUT}: Vehicle outer side bead filler sheet

### Best Mode for carrying out the Invention

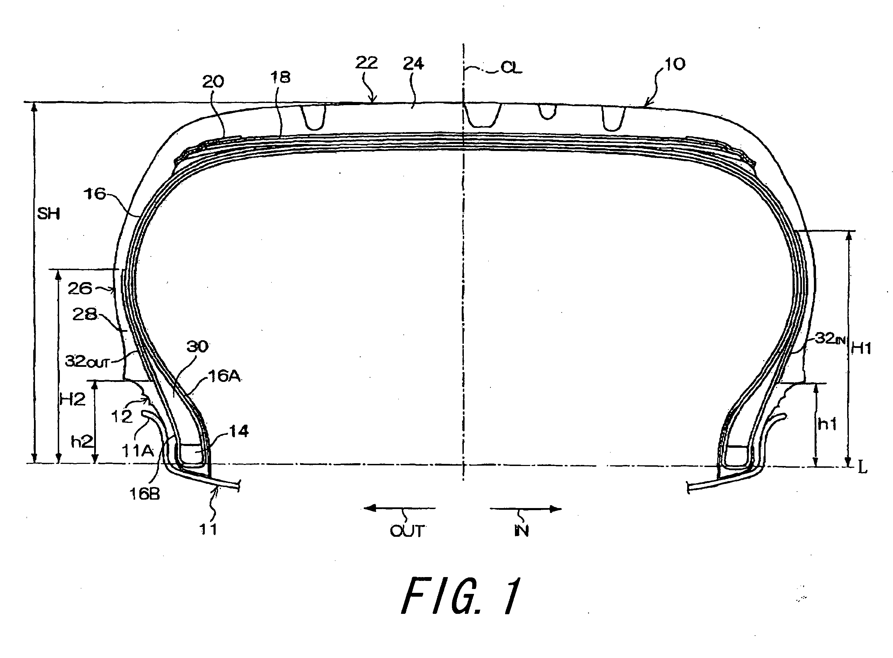

Hereinafter, a pneumatic tire 10 according to an embodiment of the present invention will be described in detail with reference to the drawings.
As shown in a sectional view in the tire widthwise direction of FIG. 1, the pneumatic tire 10 of the present embodiment, assembled with a rim 11, has a radial structure including: a pair of bead portions 12; a carcass 16 constituted of at least one (one in the present embodiment) carcass ply extending over the pair of bead portions 12 in a toroidal shape, with respective end portions thereof being turned up around bead cores 14; a belt 18 formed by plural belt layers and provided on the outer peripheral side of a crown region of the carcass 16; a belt reinforcing layer 20 provided at each side portion on the outer peripheral side of the belt 18; tread rubber 24 forming a tread portion 22 on the outer peripheral side of the belt reinforcing layer 20; a sidewall portion 26; and sidewall rubber 28 disposed on the outer surface side of the carcass 16 to form the outer side surface of the bead portion 12.
The reference number 11 A represents a rim flange provided on a rim 11. The arrow OUT in FIG. 1 represents a tire portion which is positioned on the vehicle outer side in a state where the tire is mounted on a vehicle and the arrow IN represents a tire portion which is positioned on the vehicle inner side in the same situation.

A bead filler 30 extending toward the outer side in the tire radial direction of the bead core 14 is provided between a main body 16A of the carcass 16 straddling over one bead core 14 and the other bead core 14 and each turned-up portion 16B of the carcass 16 turned up around the corresponding bead core 14 to close the corresponding end portion of the carcass. The thickness of the bead filler 30 gradually decreases toward the outer side in the tire radial direction.
The bead filler 30 is formed of rubber having higher rubber hardness than the sidewall rubber 28.

A vehicle inner side bead filler sheet 32_{IN} is attached to a tire side portion on the vehicle inner side such that the vehicle inner side bead filler sheet is firmly adhered to the outer surface of the carcass 16. A vehicle outer side bead filler sheet 32_{OUT} is attached to a tire side portion on the vehicle outer side such that the vehicle outer side bead filler sheet is firmly adhered to the outer surface of the carcass 16.

The vehicle inner side bead filler sheet 32_{IN} and the vehicle outer side bead filler sheet 32_{OUT} each have a constant thickness and are formed of rubber having high hardness. The rubbers constituting the vehicle inner side bead filler sheet 32_{IN} and the vehicle outer side bead filler sheet 32_{OUT} respectively are preferably rubber of the same type as the rubber constituting the bead filler 30. In the present embodiment, the rubber constituting the vehicle inner side bead filler sheet 32_{IN} and the rubber constituting the vehicle outer side bead filler sheet 32_{OUT} are the same rubber as that constituting the bead filler 30.
The thickness t of each of the vehicle inner side bead filler sheet 32_{IN} and the vehicle outer side bead filler sheet 32_{OUT} is preferably in the range of 0.5 to 2.0 mm, and the thickness of the sidewall rubber 28 is preferably in the range of 1.5 to 6.0 mm.

The inner end in the tire radial direction of the vehicle inner side bead filler sheet 32_{IN} and the inner end in the tire radial direction of the vehicle outer side bead filler sheet 32_{OUT} are positioned on the inner side in the radial direction than the outer end in the tire radial direction of the adjacent bead filler 30, respectively.
Due to this, a portion of a tire radial direction inner part of the vehicle inner side bead filler sheet 32_{IN} and a portion of a tire radial direction inner part of the vehicle outer side bead filler sheet 32_{OUT} overlap with a portion of a tire radial direction outer part of the adjacent bead filler 30 by way of the turned-up portion 16B of the carcass 16, respectively.
Accordingly, rigidity of the bead portion 12, in particular, is enhanced, whereby driving stability is improved.

Provided that the tire sectional height is SH, the height of the vehicle inner side bead filler sheet from the reference line L passing through a rim diameter line in use for measuring the tire sectional height SH and in parallel to the tire center axis, to the outer end in the tire radial direction of the vehicle inner side bead filler sheet 32_{IN}, measured from the reference line L toward the outer side in the tire radial direction, is H1 and the height of the vehicle outer side bead filler sheet from the reference line L to the outer end in the tire radial direction of the vehicle outer side bead filler sheet 32_{OUT} is H2, the height H1 of the vehicle inner side bead filler sheet is smaller than the tire sectional height SH and larger than the height H2 of the vehicle outer side bead filler sheet.

In the present embodiment, the height H1 of the vehicle inner side bead filler sheet is preferably set in the range of 50 to 70% of the tire sectional height SH and H1/H2 is preferably set in the range of 105 to 160%.
Provided that the distance from the reference line L to the inner end in the tire radial direction of the vehicle inner side bead filler sheet 32_{IN} is h1 and the distance from the reference line L to the inner end in the tire radial direction of the vehicle outer side bead filler sheet 32_{OUT} is h2, h1 = h2 in the present embodiment.

The vehicle inner side bead filler sheet is disposed so as to cover the vicinities of the maximum width position of the tire.
Accordingly, the movements in the vertical direction of a running vehicle can be absorbed and rigidity in the lateral and torsional directions is enhanced, whereby driving stability is improved.

### (Operation)

Next, an operation of the pneumatic tire 10 of the present embodiment will be described. In the pneumatic tire 10 of the present embodiment, the vehicle inner side bead filler sheet 32_{IN} is provided at the tire side portion which is positioned on the vehicle inner side when the tire is mounted on a vehicle, the vehicle outer side bead filler sheet 32_{OUT} is provided at the tire side portion which is positioned on the vehicle outer side when the tire is mounted on a vehicle, the height H1 of the vehicle inner side bead filler sheet is set in the range of 50 to 70% of the tire sectional height SH, and H1/H2 is preferably set in the range of 105 to 160%, so that the rigidity of the tire side portion on the vehicle inner side is relatively higher than the rigidity of the tire side portion on the vehicle outer side.

As a result, a steering force intended by a driver can be easily transmitted to a road surface, while increase in rigidity of the tire side portion on the vehicle outer side, which side portion receives relatively large input from irregularities on a road surface, is suppressed, whereby vibrations caused to the tire and eventually the vehicle can be alleviated.

In a case where the height H1 of the vehicle inner side bead filler sheet is less than 50% of the tire sectional height SH, rigidity of the tire side portion on the vehicle inner side is not sufficiently enhanced, whereby driving stability is not sufficiently improved.

In a case where the height H1 of the vehicle inner side bead filler sheet exceeds 70% of the tire sectional height SH, rigidity of the tire side portion on the vehicle inner side is too high, whereby riding comfort deteriorates.

Next, in a case where H1/H2 is less than 105%, rigidity of the tire side portion on the vehicle inner side is not sufficiently enhanced, whereby driving stability is not sufficiently improved.

In a case where H1/H2 exceeds 160%, rigidity of the tire side portion on the vehicle inner side is too high, whereby riding comfort deteriorates.

### [Other Embodiments]

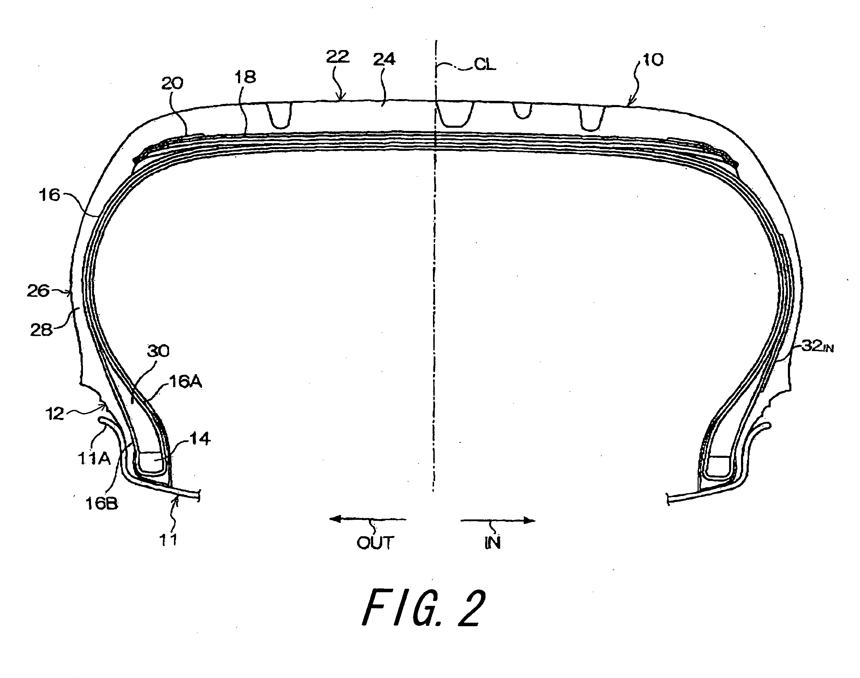

Although the vehicle inner side bead filler sheet 32_{IN} and the vehicle outer side bead filler sheet 32_{OUT} are provided in the pneumatic tire 10 of the present embodiment, the vehicle outer side bead filler sheet 32_{OUT} may be omitted depending on the application, as shown in FIG. 2.

Further, although the rubbers constituting the vehicle inner side bead filler sheet 32_{IN} and the vehicle outer side bead filler sheet 32_{OUT} respectively are rubber of the same type or species in the pneumatic tire 10 of the present embodiment, the hardness of the rubber constituting the vehicle inner side bead filler sheet 32_{IN} may be made higher than the hardness of the rubber constituting the vehicle outer side bead filler sheet 32_{OUT}. As a result, rigidity of the tire side portion on the vehicle inner side is further enhanced, whereby driving stability can be further improved.

### Example 1

In order to confirm an effect of the present invention, there were prepared: one type of pneumatic tire of Conventional Example; one (two) types of pneumatic tire of Comparative Examples; two types of pneumatic tire of Examples to which the present invention had been applied. Each of these tires was actually mounted on a vehicle and subjected to running tests, and driving stability and riding comfort were compared between the tires.
Specifically, the tire of Conventional Example has a structure where a bead filler sheet is not disposed therein, the tire of Example 1 has a structure as show in FIG. 2, the tire of Example 2 has a structure as show in FIG. 2(1), the tire of Comparative Example 1 has a structure in which the vehicle outer side bead filler sheet and the vehicle inner side bead filler sheet are disposed so as to have the same length, respectively, and the tire of Comparative Example 2 has a structure in which the outer end in the tire radial direction of the bead filler is positioned on the outer side in the tire radial direction than the outer end in the tire radial direction of the turned-up portion of the carcass.
In Conventional Example and Comparative Examples 1 and 2, the structures thereof other than the bead filler and the bead filler sheet needed no changes and thus were prepared in accordance with the tires of Examples, respectively.

The tests were conducted by: running a test vehicle, on a test course including a circular road having relatively long linear portions and a handling-evaluation road having curves ranging from a gentle one to a sharp one, at a speed in the speed range from a relatively low speed to 100 km/h, which would be generally experienced by drivers in public roads; and evaluating driving stability (handle response) and riding comfort by a professional test driver's feeling evaluation.

The conditions in the tests are as follows.

| | |
|---|---|
| Tire size: | 225/55R17 |
| Rim size: | 7.5J × 17 |
| Test vehicle: | "Celsior" manufactured by TOYOTA MOTOR |
| | CORPORATION |
| Air pressure of tire: | 220 kPa (both front and rear wheels) |

The evaluation results are shown in Table 1 below. 10 points are the full score and the larger points represent the better performances.

**[Table 1]**

| | | Conventional Example | Example 1 | Example 2 | Comparative Example 1 | Comparative Example 2 |
|---|---|---|---|---|---|---|
| Absence/presence of bead filler sheet | Vehicle outer side | Absent | Absent | Present | Present | Absent |
| | Vehicle inner side | Absent | Present | Present | Present | Absent |
| Ratio of bead filler sheet height H1/H2 | | - | - | 140% | 100% | - |
| Driving stability | | 6 | 6.5 | 7 | 7 | 6 |
| Riding comfort | | 6 | 6 | 6 | 5.5 | 5.5 |

From the test results, it is understood that the pneumatic tires of Examples to which the present invention has been applied exhibit improvements in both driving stability and riding comfort, as compared with the tires of Conventional Example and Comparative Examples 1 and 2.

## Claims

1. A pneumatic tire (10) comprising:
a pair of bead cores (14);
a carcass (16) extending over the pair of bead cores (14), with respective end portions thereof being turned up around the bead cores (14);
a bead filler (30) provided between a main body of the carcass (16) extending from one bead core (14) to the other bead core (14) and a turned-up portion of the carcass (16) turned up around the bead core (14), the bead filler (30) extending from the bead core (14) toward the outer side in the radial direction;
a belt (18) provided on the outer peripheral side of a crown region of the carcass (16);
a tread rubber (24) disposed on the outer peripheral side of the belt (18); and
a sidewall rubber disposed on the outer side in the widthwise direction of the carcass (16),
wherein a vehicle inner side bead filler sheet (32_{IN}) having a sheet-like shape is provided at a tire side portion which is positioned on the vehicle inner side when the tire is mounted on a vehicle, in a manner that the bead filler sheet (32_{IN}) is disposed from the inner side toward the outer side in the tire radial direction, such that rigidity of the tire side portion on the vehicle inner side of the tire is higher than rigidity of a tire side portion which is positioned on the vehicle outer side when the tire is mounted on a vehicle,
wherein a vehicle outer side bead filler sheet (32_{OUT}) having a sheet-like shape is provided at the tire side portion which is positioned on the vehicle outer side when the tire is mounted on a vehicle, in a manner that the bead filler sheet (32_{OUT}) is disposed from the inner side toward the outer side in the tire radial direction, and
provided that the height of the vehicle inner side bead filler sheet (32 _{IN}) from a reference line (L) passing through a rim diameter line in use for measuring a tire sectional height and in parallel to the tire center axis, to the outer end in the tire radial direction of the vehicle inner side bead filler sheet (32 _{IN}), measured from the reference line (L) toward the outer side in the tire radial direction, is H1 and the height of the vehicle outer side bead filler sheet (32 _{OUT}) from the reference line (L) to the outer end in the tire radial direction of the vehicle outer side bead filler sheet (32 _{OUT}), measured from the reference line (L) toward the outer side in the tire radial direction, is H2,
the pneumatic tire is **characterized in that** H1/H2 is in the range of 105 to 160%, and the vehicle inner side bead filler sheet (32 _{IN}) and the vehicle outer side bead filler sheet (32 _{OUT}) are formed of rubber of the same type as rubber of the bead filler (30).

2. The pneumatic tire (10) of claim 1, wherein the vehicle inner side bead filler sheet (32 _{IN}) and the vehicle outer side bead filler sheet (32 _{OUT}) are formed of rubber, respectively, and rubber hardness of the vehicle inner side bead filler sheet (32 _{IN}) is higher than rubber hardness of the vehicle outer side bead filler sheet (32 _{OUT}).

3. The pneumatic tire (10) of claim 1, wherein the vehicle inner side bead filler sheet (32 _{IN}) is disposed so as to cover the vicinities of the maximum width position of the tire.

## Patentansprüche

1. Luftreifen (10), der aufweist:
ein Paar Wulstkerne (14);
eine Karkasse (16), die sich über das Paar der Wulstkerne (14) erstreckt, wobei deren jeweilige entsprechende Endabschnitte um die Wulstkerne (14) umgestülpt sind;
einen Kemreiter (30), der zwischen einem Hauptkörper der Karkasse (16), der sich von einem Wulstkern (14) zum anderen Wulstkern (14) erstreckt, und einem umgestülpten Abschnitt der Karkasse (16) vorhanden ist, die um den Wulstkern (14) umgestülpt ist, wobei sich der Kernreiter (30) vom Wulstkern (14) in Richtung der Außenseite in der radialen Richtung erstreckt;
einen Gürtel (18), der auf der äußeren Umfangsseite eines Zenitbereiches der Karkasse (16) vorhanden ist;
einen Laufflächengummi (24), der auf der äußeren Umfangsseite des Gürtels (18) angeordnet ist; und
einen Seitenwandgummi, der auf der Außenseite in der Breitenrichtung der Karkasse (16) angeordnet ist,
wobei eine Kemreiterlage (32_{IN}) auf der Fahrzeuginnenseite mit einer lagenartigen Form in einem Reifenseitenabschnitt vorhanden ist, der auf der Fahrzeuginnenseite, wenn der Reifen auf einem Fahrzeug montiert ist, in einer Weise positioniert ist, dass die Kemreiterlage (32_{IN}) von der Innenseite in Richtung der Außenseite in der radialen Reifenrichtung angeordnet ist, so dass die Steifigkeit des Reifenseitenabschnittes auf der Fahrzeuginnenseite des Reifens höher ist als die Steifigkeit eines Reifenseitenabschnittes, der auf der Fahrzeugaußenseite positioniert ist, wenn der Reifen am Fahrzeug montiert ist,
wobei eine Kemreiterlage (32_{OUT}) auf der Fahrzeugaußenseite mit einer lagenartigen Form im Reifenseitenabschnitt vorhanden ist, der auf der Fahrzeugaußenseite, wenn der Reifen auf einem Fahrzeug montiert ist, in einer Weise positioniert ist, dass die Kemreiterlage (32_{OUT}) von der Innenseite in Richtung der Außenseite in der radialen Reifenrichtung angeordnet ist, und
vorausgesetzt, dass die Höhe der Kernreiterlage (32_{IN}) auf der Fahrzeuginnenseite von einer Bezugslinie (L), die durch eine Felgendurchmesserlinie bei Benutzung für das Messen einer Reifenschnitthöhe und parallel zur Reifenmittelachse gelangt, zum äußeren Ende in der radialen Reifenrichtung der Kemreiterlage (32_{IN}) auf der Fahrzeuginnenseite, gemessen von der Bezugslinie (L) in Richtung der Außenseite in der radialen Reifenrichtung, (H1) beträgt, und dass die Höhe der Kemreiterlage (32_{OUT}) auf der Fahrzeugaußenseite von der Bezugslinie (L) zum äußeren Ende in der radialen Reifenrichtung der Kemreiterlage (32_{OUT}) auf der Fahrzeugaußenseite, gemessen von der Bezugslinie (L) in Richtung der Außenseite in der radialen Reifenrichtung, (H2) beträgt,
wobei der Luftreifen **dadurch gekennzeichnet** wird, dass (H1/H2) im Bereich von 105 bis 160 % liegt, und dass die Kemreiterlage (32_{IN}) auf der Fahrzeuginnenseite und die Kemreiterlage (32_{OUT}) auf der Fahrzeugaußenseite aus Gummi des gleichen Typs wie der Gummi des Kemreiters (30) hergestellt werden.

2. Luftreifen (10) nach Anspruch 1, bei dem die Kemreiterlage (32_{IN}) auf der Fahrzeuginnenseite und die Kernreiterlage (32_{OUT}) auf der Fahrzeugaußenseite jeweils aus Gummi hergestellt werden, und wobei die Gummihärte der Kernreiterlage (32_{IN}) auf der Fahrzeuginnenseite höher ist als die Gummihärte der Kemreiterlage (32_{OUT}) auf der Fahrzeugaußenseite.

3. Luftreifen (10) nach Anspruch 1, bei dem die Kemreiterlage (32_{IN}) auf der Fahrzeuginnenseite so angeordnet ist, dass die Umgebungen der maximalen Breitenposition des Reifens bedeckt werden.

## Revendications

1. Bandage pneumatique (10), comprenant :
une paire de tringles (14) ;
une carcasse (16), s'étendant au-dessus de la paire de tringles (14), ses parties d'extrémité respectives étant retournées autour des tringles (14) ;
un bourrage sur tringle (30), agencé entre un corps principal de la carcasse (16) s'étendant d'une tringle (14) vers l'autre tringle (14), et une partie retournée de la carcasse (16), retournée autour de la tringle (14), le bourrage sur tringle (30) s'étendant de la tringle (14) vers le côté externe dans la direction radiale ;
une ceinture (18), agencée sur le côté périphérique externe d'une région de sommet de la carcasse (16) ;
une gomme de bande de roulement (24), agencée sur le côté périphérique externe de la ceinture (18) ; et
une gomme de flanc, agencée sur le côté externe dans la direction de la largeur de la carcasse (16) ;
dans lequel une feuille de bourrage sur tringle (32_{IN}) sur le côté interne du véhicule, ayant une forme en feuille, est agencée au niveau d'une partie latérale du bandage pneumatique qui est positionnée sur le côté interne de véhicule lorsque le bandage pneumatique est monté sur un véhicule, de manière que la feuille de bourrage sur tringle (32_{IN}) est agencée du côté interne vers le côté externe, dans la direction radiale du bandage pneumatique, la rigidité de la partie latérale du bandage pneumatique sur le côté interne du véhicule du bandage pneumatique étant ainsi supérieure à la rigidité d'une partie latérale du bandage pneumatique positionnée sur le côté externe du véhicule lorsque le bandage pneumatique est monté sur un véhicule ;
dans lequel une feuille de bourrage sur tringle (32_{OUT}) du côté externe du véhicule, ayant une forme en feuille, est agencée au niveau de la partie latérale du bandage pneumatique qui est positionnée sur le côté externe du véhicule lorsque le bandage pneumatique est monté sur un véhicule, de manière que la feuille de bourrage sur tringle (32_{OUT}) est agencée du côté interne vers le côté externe, dans la direction radiale du bandage pneumatique ; et
à condition que la hauteur de la feuille de bourrage sur tringle (32_{IN}) du côté interne du véhicule, d'une ligne de référence (L) passant à travers une ligne du diamètre de la jante en service, pour mesurer une hauteur de section du bandage pneumatique, et parallèle à l'axe central du bandage pneumatique, vers l'extrémité externe dans la direction radiale du bandage pneumatique de la feuille de bourrage sur tringle (32_{IN}) du côté interne du véhicule, mesurée de la ligne de référence (L) vers le côté externe, dans la direction radiale du bandage pneumatique, corresponde à H1, la hauteur de la feuille de bourrage sur tringle (32_{OUT}) du côté externe du véhicule, de la ligne de référence (L) vers l'extrémité externe, dans la direction radiale du bandage pneumatique, de la feuille de bourrage sur tringle (32_{OUT}) du côté externe du véhicule, mesurée à partir de la ligne de référence (L) vers le côté externe dans la direction radiale du bandage pneumatique, correspondant à H2 ;
le bandage pneumatique étant **caractérisé en ce que** H1/H2 est compris dans l'intervalle allant de 105 à 160%, la feuille de bourrage sur tringle (32_{IN}) du côté interne du véhicule et la feuille de bourrage sur tringle (32_{OUT}) du côté externe du véhicule étant formées à partir de caoutchouc du même type que le caoutchouc du bourrage sur tringle (30).

2. Bandage pneumatique (10) selon la revendication 1, dans lequel la feuille de bourrage sur tringle (32_{IN}) du côté interne du véhicule et la feuille de bourrage sur tringle (32_{OUT}) du côté externe du véhicule sont respectivement formées à partir de caoutchouc, la dureté du caoutchouc de la feuille de bourrage sur tringle (32_{IN}) du côté interne du véhicule étant supérieure à la dureté du caoutchouc de la feuille de bourrage sur tringle (32_{OUT}) du côté externe du véhicule.

3. Bandage pneumatique (10) selon la revendication 1, dans lequel la feuille de bourrage sur tringle (32_{IN}) du côté interne du véhicule est agencée de sorte à recouvrir les régions voisines de la position à largeur maximale du bandage pneumatique.
